(19) Europäisches Patentamt
European Patent Office
Office européen des brevets

(11) **EP 3 908 390 B1**

(12) **EUROPÄISCHE PATENTSCHRIFT**

(45) Veröffentlichungstag und Bekanntmachung des Hinweises auf die Patenterteilung:
**15.07.2026 Patentblatt 2026/29**

(21) Anmeldenummer: **20700489.6**

(22) Anmeldetag: **10.01.2020**

(51) Internationale Patentklassifikation (IPC):
***B01D 39/16*** *(2006.01)* ***B01D 39/18*** *(2006.01)*

(52) Gemeinsame Patentklassifikation (CPC):
**B01D 39/1623; B01D 39/163; B01D 39/18; F02M 35/02441;** B01D 2239/0216;
B01D 2239/0435; B01D 2239/0622;
B01D 2239/0627; B01D 2239/0654;
B01D 2239/1233

(86) Internationale Anmeldenummer:
**PCT/EP2020/050562**

(87) Internationale Veröffentlichungsnummer:
**WO 2020/144342 (16.07.2020 Gazette 2020/29)**

(54) **FILTERMEDIUM FÜR MOTORLUFTFILTER**

FILTER MEDIUM FOR ENGINE AIR FILTERS

MATÉRIAU FILTRANT POUR FILTRE À AIR DE MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.01.2019 DE 102019100468**

(43) Veröffentlichungstag der Anmeldung:
**17.11.2021 Patentblatt 2021/46**

(73) Patentinhaber: **Neenah Gessner GmbH
83052 Bruckmühl (DE)**

(72) Erfinder:
• **GEISBERGER, Georg
83043 Bad Aibling (DE)**
• **DEMMEL, Andreas
83620 Feldkirchen-Westerham (DE)**

(74) Vertreter: **Haseltine Lake Kempner LLP
One Portwall Square
Portwall Lane
Bristol BS1 6BH (GB)**

(56) Entgegenhaltungen:
**DE-A1- 4 443 158      US-A1- 2014 366 732
US-A1- 2015 013 285**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft ein Filtermedium für Motorluftfilter, wobei das Filtermedium eine Trägerlage und eine Meltblownlage umfasst, und ein Filterelement mit einem derartigen Filtermedium.

Stand der Technik

Zu den wichtigen Qualitätskriterien bei den Luftfiltermedien zählen eine hohe Filtrationseffizienz, also das Abscheiden von großen und kleinen Partikeln sowie eine ausreichend hohe Staubspeicherkapazität. Bei den Motorluftfiltermedien ist zu beachten, dass der Motor bei voller Beanspruchung abhängig vom Hubraum zwischen 200 m$^3$ und 500 m$^3$ Luft pro Stunde ansaugt. Diese ist mit Schmutz- und Staubpartikeln belastet. Lässt das Filterelement nicht genügend Luft passieren, kann der Motor seine volle Leistungsfähigkeit nicht entfalten. US2015013285A1 offenbart ein Filtermedium, vor allem für Motorenluftfilter, mit einem Substrat und einer Feinfaserlage die durch meltblowing hergestellt werden kann.

Motorluftfilterelemente sind dafür zuständig, den Motor mit gereinigter Luft zu versorgen, die für einen einwandfreien Verbrennungsprozess notwendig ist. Das Motorluftfiltermedium hat bezüglich des Luftmanagements im Fahrzeug außerdem folgende Funktionen: Filtration der Motoransaugluft; Verbesserung der Luftströmung für eine optimale Verbrennung und Motorakustik, wie das Dämpfen der Ansauggeräusche; Schutz von nachgelagerten Motorteilen, beispielsweise eines Turboladers, vor Partikelbeschuss.

Um die Filtrationseffizienz zu erhöhen, werden Nanofaserlagen eingesetzt (d.h. mit Faserdurchmesser kleiner 1,5 μm), die aber komplizierte Herstellungsverfahren erfordern und daher teuer sind. Ein weiterer Nachteil ist die geringe mechanische Stabilität der Nanofaserschicht.

Zusätzlich müssen die Motorluftfilter in den vom Fahrzeughersteller angegebenen Intervallen ausgetauscht werden. Dies wird im Rahmen der Inspektionsarbeiten erledigt. Bei hohem Staubanteil in der Luft (oder bestimmter Laufleistung) empfiehlt es sich, den Filter früher zu ersetzen. Daher sollte idealerweise das Filtermedium (bzw. der Filter) so kostengünstig wie möglich sein.

Der Erfindung liegt daher die Aufgabe zugrunde, ein Filtermedium und ein Filterelement zu schaffen, das insbesondere für Luftfilter von Motoren geeignet ist, eine sehr gute Effizienz und Staubspeicherkapazität aufweist, sowie mit Standard-Herstellungsverfahren leicht zu produzieren und entsprechend kostengünstig herzustellen ist.

Detaillierte Beschreibung der Erfindung

Die vorliegende Erfindung betrifft ein Filtermedium für Motorluftfilter, umfassend eine Trägerlage und eine Meltblownlage, die Polyesterfasern enthält, wobei das Filtermedium elektrisch geladen ist, wobei das Filtermedium elektrisch geladen ist, wobei das Filtermedium einen maximalen Porendurchmesser von 35 bis 110 μm aufweist, bestimmt nach DIN ISO 4003 (1990-10), und wobei die Durchmesser von vielen Poren des Filtermediums bei 25-65 μm liegen, bestimmt nach DIN ISO 4003 (1990-10).

Das Filtermedium ist besonders geeignet für Motorluftfilter. Bisher wurden Motorluftfiltermedien nicht geladen, weil bei hohem Staubanfall eine schnelle Entladung erfolgt und somit kein Unterschied in der Filtrationseffizienz zu einem nichtgeladene Medium erkennbar war. Es wurde überaschenderweise festgestellt, dass das geladene Filtermedium der vorliegenden Erfindung eine bessere Effizienz und Staubspeicherkapazität hat im Vergleich zu nicht geladenen Medien. Daher kann die Meltblownlage mit größeren Faserdurchmessern hergestellt werden. Dies ermöglicht eine kostengünstigere Herstellung sowie eine höhere Effizienz und Staubspeicherkapazität des Filtermediums bei gleichem Druckverlust.

Vorzugsweise enthalten die Polyesterfasern Polybutylenterephthalat oder bestehen aus Polybutylenterephthalatfasern.

Der mittlere Durchmesser dieser Meltblownfasern ist insbesondere 2 bis 8 μm, bevorzugt 2 bis 5 μm und besonders bevorzugt 3 bis 4 μm. Der mittlere Durchmesser wird mit der hier beschriebenen Methode gemessen.

Die erfindungsgemäße Meltblownlage hat eine Dicke von insbesondere 0,05 bis 0,90 mm bei 0,005 bar Auflagedruck, bevorzugt 0,10 bis 0,80 mm und besonders bevorzugt von 0,15 bis 0,70 mm.

Die Flächenmasse der Meltblownlage beträgt insbesondere 5 bis 90 g/m$^2$, bevorzugt 10-60 g/m$^2$, besonders bevorzugt 15-25 g/m$^2$.

Die Luftdurchlässigkeit der erfindungsgemäßen Meltblownlage beträgt insbesondere 50-3000 l/m$^2$s, bevorzugt 300 bis 2000 l/m$^2$s und besonders bevorzugt 800 bis 1300 l/m$^2$s.

Zur Herstellung des erfindungsgemäßen Meltblownvlieses wird der in der Fachwelt bekannte Meltblownprozess verwendet. Geeignete Polymere (insbesondere Polyester) sind zum Beispiel Polyethylenterephthalat oder Polybutylenterephthalat. Bevorzugt umfasst die Meltblownlage Polybutylenterephthalat-Fasern. Besonders bevorzugt besteht die Meltblownlage aus Polybutylenterephthalat-Fasern. Den Polymeren können je nach Anforderungen noch Additive, wie zum Beispiel Hydrophilierungsmittel, Hydrophobierungsmittel, Kristallisationsbeschleuniger oder Farben, zugemischt werden. Die Meltblownlage kann während der Herstellung elektrisch geladen werden oder zusammen mit der Trägerlage geladen werden. Als Lademethoden kommen alle bekannten Methoden wie z.B. Corona-Ladung in Frage.

Zur Erhöhung der Ladungsstabilität können in der Fachwelt bekannte Additive zugemischt werden, wie zum Beispiel Bis-stearoyl-ethylendiamid.

Die Trägerlage kann eine nassgelegte Lage oder eine trockengelegte Lage sein.

Nassgelegte Lagen oder Papierlagen im Sinne der Erfindung sind alle Lagen, die mit den in der Fachwelt bekannten Nasslegeprozessen zur Herstellung von Filterpapieren erzeugt werden können. Die nassgelegte Lage kann natürliche Fasern, synthetische Fasern oder Mischungen davon enthalten. Beispiele für natürliche Fasern sind Zellulose, Baumwolle, Wolle und Hanf, wobei das eingesetzte Zellulosematerial holzfreie und/oder holzhaltige Zellulose von Nadel- und/oder Laubbäumen, Regeneratzellulose und fibrillierte Zellulose beinhalten kann.

Als Synthesefasern eignen sich zum Beispiel Polyesterfasern (z.B. Polyethylenterephthalat-, Polybutylenterephthalat- und PLA-fasern), Polyolephinefasern, Polyamidfasern, Polyacrylnitrilfasern und Mehrkomponentenfasern mit unterschiedlichen Schmelzpunkten der einzelnen Komponenten.

Die Synthesefasern in der nassgelegten Lage haben einen mittleren Faserdurchmesser von insbesondere 3 $\mu$m (0,1 dtex) bis 30 $\mu$m (10 dtex), bevorzugt von 7 bis 20 $\mu$m, und die Schnittlänge beträgt vorzugsweise 3 mm - 20 mm, besonders bevorzugt 4 mm - 12 mm.

Die Trägerlage kann 100 Gew.% natürliche Fasern (basierend auf die gesamte Menge von Fasern) umfassen. Die Trägerlage kann 30-45 Gew.% Synthesefasern und 70-55 Gew.% natürliche Fasern umfassen oder 100 Gew.% Synthesefasern umfassen. Vorzugsweise umfasst die Trägerlage 100 Gew.% natürliche Fasern.

Die nassgelegte Trägerlage hat eine Dicke bei 0,005 bar Auflagedruck von insbesondere 0,1 mm bis 1,2 mm, bevorzugt 0,2 mm bis 0,9 mm, besonders bevorzugt 0,3 mm bis 0,8 mm.

Die trockengelegte Trägerlage ist eine Lage, die mit den in der Fachwelt bekannten Trockenlegeprozessen zur Herstellung von Vlieslagen erzeugt werden kann. Bevorzugt ist die Vlieslage ein Spinnvlies oder kardiertes Vlies, das nur synthetische Fasern umfasst. Vorzugsweise besteht die trockengelegte Trägerlage aus einer Spinnvlieslage. Die trockengelegte Trägerlage hat vorzugsweise bei 0,005 bar Auflagedruck eine Dicke von 1 mm bis 3,0 mm. Besonders bevorzugt beträgt die Dicke der trockengelegte Trägerlage 1,2 mm bis 2,5 mm und insbesondere 1,3 mm bis 2,1 mm.

Die trockengelegte Trägerlage umfasst Mono- und/oder Bikomponenten- Synthesefasern. Vorzugsweise umfasst die trockengelegte Trägerlage (oder besteht aus) Monokomponent-Polyesterfasern und besonders bevorzugt Polyethylenterephthalatfasern. Als Synthesefasern eignen sich zum Beispiel Polyesterfasern (z.B. Polyethylenterephthalat-, Polybutylenterephthalat- und PLA-Fasern), Polyolephinfasern, Polyamidfasern, Polyacrylnitrilfasern und Mehrkomponentenfasern mit unterschiedlichen Schmelzpunkten der einzelnen Komponenten.

Bikomponentenfasern bestehen aus einem thermoplastischen Material mit mindestens einem Faseranteil mit einem höheren Schmelzpunkt und einem zweiten Faseranteil mit einem niedrigeren Schmelzpunkt. Die physikalische Konfiguration dieser Fasern ist dem Fachmann bekannt und besteht typischerweise aus einer Seite-an-Seite- oder Mantel-Kern-Struktur.

Die Bikomponentenfasern können aus einer Vielzahl von thermoplastischen Materialien hergestellt werden, einschließlich Polyolefinen (wie z.B. Polyethylenen und Polypropylenen), Polyestern (wie Polyethylenterephthalat (PET), Polybutylenterephthalat (PBT), Polyamiden einschließlich Nylon 6, Nylon 6,6, Nylon 6,12 usw. Bevorzugt werden die Bikomponentenfasern aus Polyestern hergestellt. Besonders bevorzugt bestehen die Bikomponentenfasern aus PET/-coPET.

Die Mono- und Bikomponentenfasern der trockengelegten Trägerlage haben insbesondere einen mittleren Durchmesser von 10 bis 50 $\mu$m, bevorzugt von 12 bis 40 $\mu$m und besonders bevorzugt 14 bis 35 $\mu$m.

Die Trägerlage kann imprägniert sein, wobei die Art des Imprägniermittels vom Fachmann je nach Einsatzzweck des erfindungsgemäßen Filtermaterials ausgewählt wird. Der Anteil des trockenen Imprägniermittels am Gesamtgewicht des Papiers beträgt typischerweise 0,5 Gew.% - 50 Gew.%, bevorzugt 5 Gew.% - 40 Gew.%. Als Imprägniermittel kommen die für Filterpapiere bekannten Substanzen zur Anwendung, wie zum Beispiel Phenolharze oder Epoxydharze aus alkoholischen Lösungen, aber auch wässrige Dispersionen zum Beispiel von Acrylaten, Phenolharzen, Polyvinylchlorid, Polyvinylacetaten. Eine weitere mögliche Klasse von Imprägniermittel sind wässrige Lösungen von zum Beispiel Polyvinylalkohol, Melaminharz, Harnstoffharz. Zur Verbesserung der Benetzbarkeit und somit zur Steigerung der Durchflussrate kann die Imprägnierung durch geeignete Zusätze wie z.B. oberflächenaktive Substanzen oder Fluorkarbonharze hydrophil bzw. oleophil eingestellt werden.

Die Flächenmasse der Trägerlage (d.h. nass- oder trockengelegte Lage) beträgt insbesondere 50-350 g/m$^2$, bevorzugt 70-250 g/m$^2$ und besonders bevorzugt 80-200 g/m$^2$.

Die Trägerlage (d.h. nass- oder trockengelegte Lage) hat eine Luftdurchlässigkeit von insbesondere 50-4000 l/m$^2$s, bevorzugt 100-3000 l/m$^2$s und besonders bevorzugt 200 bis 2800 l/m$^2$s.

Das Filtermedium kann entweder nur aus der Kombination der hier beschriebenen Trägerlage und Meltblownlage bestehen oder noch eine oder mehrere andere Lagen umfassen.

Zur Herstellung des Filtermediums kann die Meltblownlage mit der Trägerlage verbunden werden. Dafür kann jedes dem Fachmann bekannte Verfahren benutzt werden, wie zum Beispiel Vernadelungsverfahren, Wasserstrahlvernadelungsverfahren, thermische Verfahren (d.h. Kalanderverfestigung und Ultraschall-Verfestigung) und chemische Verfahren (d.h. Verfestigung mittels Klebstoffe). Bevorzugt wird die Meltblownlage mit der Trägerlage mittels Punktkalander oder Klebstoffen verbunden. Die Auftragsmenge des Klebstoffs ist 2-10 $g/m^2$, bevorzugt 4-8 $g/m^2$.

Das erfindungsgemäße Filtermedium hat eine Flächenmasse von vorzugsweise 55 $g/m^2$ - 440 $g/m^2$, bevorzugt von 80 bis 300 $g/m^2$ und besonders bevorzugt von 90 bis 200 $g/m^2$. Bevorzugt beträgt die Luftdurchlässigkeit des Filtermediums 50 - 1200 $l/m^2s$, bevorzugt 100 bis 1000 $l/m^2s$ und besonders bevorzugt 200 bis 900 $l/m^2s$.

Bevorzugt beträgt die Dicke des Filtermediums bei 0,005 bar Auflagedruck 0,4 bis 2,5 mm, besonders bevorzugt 0,45 bis 2 mm und noch bevorzugter 0,45 bis 1 mm.

Der maximaler Porendurchmesser (oder auch die größte Porengröße) des erfindungsgemäßen Filtermediums liegt bei 35-110 $\mu$m. Die Durchmesser von vielen Poren des erfindungsgemäßen Filtermediums liegen bei 25-65 $\mu$m.

Das Filtermedium hat einen H-Wert von insbesondere 1,00 bis 2,50, bevorzugt von 1,00 bis 2,00, und besonders bevorzugt von 1,00 bis 1,80. Der H-Wert berechnet sich aus:

$$\text{H-Wert= Größte Porendurchmesser/viele Poren-Durchmesser}$$

Wenn der H-Wert in dem oben beschriebenen Bereich liegt, zeigt sich eine sehr gute Homogenität, so dass das Filtermedium eine sehr hohe Effizienz und Staubspeicherkapazität für längere Zeit garantieren kann.

Das erfindungsgemäße Filtermedium hat eine Effizienz von insbesondere mindestens 99,00%, bevorzugt mindestens 99,70 und besonders bevorzugt mindestens 99,90%. Die hier angegebene Effizienz entspricht der Gesamteffizienz nach einem Druckanstieg auf 2000 Pa. Das ist zu unterscheiden von einer Anfangseffizienz.

Das erfindungsgemäße Filtermedium hat eine Staubspeicherkapazität von insbesondere 70 bis 350 $g/m^2$, bevorzugt 100 bis 300 $g/m^2$ und besonders bevorzugt von 125 bis 300 $g/m^2$.

Da das erfindungsgemäße Filtermedium eine ausgezeichnete Bruchkraft besitzt, muss es erst nach längeren Zeitintervallen erneuert werden.

Filtermedien, die auch natürliche Fasern enthalten, weisen eine Bruchkraft in Maschinenrichtung (MD) von insbesondere 60-200 N auf, bevorzugt 70-180 N und besonders bevorzugt 75-100 N. Filtermedien, die nur synthetische Fasern (und keine natürliche Fasern) enthalten, weisen eine Bruchkraft in Maschinenrichtung (MD) von 250-600 N auf, bevorzugt insbesondere 350-600 N und besonders bevorzugt 400-600 N.

Die Anströmrichtung ist bevorzugt von der Seite der Trägerlage her, kann aber auch von der Seite der Meltblownlage her sein.

Die vorliegende Erfindung betrifft auch ein Filterelement, das das Filtermedium umfasst. Das Filterelement kann zusätzlich ein anderes Filtermedium umfassen, das sich vom erfindungsgemäßen Filtermedium unterscheidet, d.h. andere Eigenschaften hat.

Ein besonders vorteilhaftes Anwendungsgebiet für das erfindungsgemäße Filtermedium sind Motorluftfilter.

**Prüfmethoden**

Flächenmasse nach DIN EN ISO 536:2012-11.

Dicke nach DIN EN ISO 9073-2 (1997-02) bei 0,5 kPa Auflagedruck mit 2500 $mm^2$ Prüffläche (56,42 mm Durchmesser).

Luftdurchlässigkeit nach DIN EN ISO 9237 (1995-12) bei 200 Pa Druckdifferenz.

Porengröße nach DIN ISO 4003 (1990-10), in Anlehnung auf Grund Flachprobenmessung. Reagenzien: Ethanol vergällt (=Ethanol 100 L mit 1 L MEK (Methyl-Ethyl-Keton) als Vergällungsmittel). Das Vlies wird luftdicht über einem Hohlraum, der mit einer Luftzuleitung und einem Anschluss an ein Manometer (U-Rohr mit mm-Anzeige) versehen ist, eingespannt.

Vergälltes Ethanol wird über den Rand des oberen Probehalters zugegeben (nicht direkt auf die Probe spritzen/ca. 4 mm Höhe) und gleichzeitig wird ein geringer Überdruck erzeugt. Der Überdruck wird langsam erhöht (ca. 5 mm WS/sec), bis die erste Luftblase sichtbar wird.

Dieser dazu notwendige Druck wird am Manometer (mm WS) abgelesen, und mit Hilfe der Oberflächenspannung des Ethanols (23°C) wird der größte Porendurchmesser, "größte Pore", errechnet. Erhöht man den Überdruck so weit, dass über die gesamte Prüffläche (10 $cm^2$) Luft hindurchtritt (annähernd gleichmäßige Verteilung der Luftblasen, jedoch keine Schaumbildung), so erhält man den Wert der vielen Poren. Dazu wird wieder der Überdruck der "vielen Poren" ermittelt und der entsprechende Porendurchmesser berechnet.

Bruchkraft

- Für gesamtes Filtermedium (Träger + Meltblown; wobei das Filtermedium natürliche Fasern umfasst) in Anlehnung an DIN EN ISO 1924-2 (2009-05) (Messstreifen mit 100 mm Länge, 15 mm Breite; Abzugsgeschwindigkeit 15 mm/min).
- Für gesamtes Filtermedium (Träger + Meltblown; wobei das Filtermedium keine natürlichen Fasern umfasst) in Anlehnung an DIN EN ISO 29073 Teil 3 (1992-08) (Messstreifen mit 100 mm Länge, 50 mm Breite; Abzugsgeschwindigkeit 100 mm/min).

Effizienz und Staubspeicherkapazität

Die angegebenen Effizienzwerte wurden in Anlehnung auf Grund Flachprobenmessung nach ISO 5011:2014 gemessen. Test Bedingungen:

- Teststaub ISO 12103-A2 (ISO Fine)
- Massenkonzentration: 1 g/m$^3$
- Anströmgeschwindigkeit 11,1 cm/s
- Filterfläche: 100 cm$^2$

Die Gesamteffizienz und die Staubspeicherkapazität werden gemessen, wenn ein Enddruck von 2000 Pa erreicht ist.

Faserdurchmesser

Messprinzip: Mittels Rasterelektronenmikroskop werden Bilder in definierter Vergrößerung aufgenommen. Diese werden mittels automatischer Software vermessen. Messstellen, die Kreuzungspunkte von Fasern erfassen und somit nicht den Faserdurchmesser darstellen, werden manuell entfernt. Faserbündel werden generell als eine Faser gewertet.

Geräte:

Rasterelektronenmikroskop Phenom Fei mit dazugehöriger Software Fibermetric V2.1

Durchführung der Prüfung:

Probenahme: Vliesstoff an 5 Stellen über Bahnbreite (bei 1,8m)

Aufnahmen:

a. Probe besputtern;
b. Zufällige Aufnahme anhand von optischem Bild, die so gefundene Stelle wird mit 1000-facher Vergrößerung mittels REM aufgenommen.
c. Faserdurchmesserbestimmung über "one click" Methode, es muss jede Faser einmal erfasst werden;
d. Durchschnittswert und Faserdurchmesserverteilung wird durch die von Fibermetric erhaltenen Daten mittels Excel ausgewertet. Somit wird pro Vlies der mittlere Faserdurchmesser an mind. fünf Stellen erfasst. Die fünf Mittelwerte werden zu einem Mittelwert zusammengefasst. Dieser Wert wird als mittlerer Faserdurchmesser des Vlieses bezeichnet. Es werden mindestens 500 Fasern ausgewertet.

**Beispiele**

Beispiel 1

Ein 20 g/m$^2$ PBT (Polybuthylenterephthalat) Meltblown mit einer Dicke von 0,22 mm, einer Luftdurchlässigkeit von 650 l/m$^2$s und einem mittleren Faserdurchmesser von 3,5 $\mu$m wurde mit einer 135 g/m$^2$ nassgelegten Papierlage mit

Dicke 0,68 mm mittels Punktkalander verbunden und mit Corona-Ladung geladen. Die hier benutzte Papierlage besteht aus Zellstoff und wurde vorher mit Harz imprägniert.

Das so erhaltene Filtermaterial hat eine Dicke von 0,75 mm, eine Luftdurchlässigkeit von 365 l/m$^2$s und eine Flächenmasse von 155 g/m$^2$. Der größte Porendurchmesser des Filtermediums liegt bei 39 $\mu$m und der Durchmesser von vielen Poren liegt bei 27 $\mu$m.

Beispiel 2

Ein 60 g/m$^2$ PBT Meltblown mit einer Dicke von 0,66 mm, eine Luftdurchlässigkeit von 1200 l/m$^2$s und einem mittleren Faserdurchmesser von 4 $\mu$m wurde mit einem 130 g/m$^2$ PET/CoPET Spinnvlies mit Dicke 1,47 mm mittels Punktkalander verbunden und mit Corona-Ladung geladen.

Das so erhaltene Filtermaterial hat eine Dicke von 2,00 mm, eine Luftdurchlässigkeit von 900 l/m$^2$s und eine Flächenmasse von 190 g/m$^2$. Der größte Porendurchmesser des Filtermediums liegt bei 100 $\mu$m und der Durchmesser von vielen Poren liegt bei 58 $\mu$m.

Vergleichsbeispiel 1

Entspricht dem gleichen Filtermedium von Beispiel 1, wurde aber nicht mit Corona-Ladung geladen.

Vergleichsbeispiel 2

Entspricht dem gleichen Filtermedium von Beispiel 2, wurde aber nicht mit Corona-Ladung geladen.

Einige Vorteile des erfindungsgemäßen Filtermediums sind in Tabelle 1 aufgeführt.

**Tabelle 1**

|  | Beispiel 1 | Vergleichsbeispiel 1 | Beispiel 2 | Vergleichsbeispiel 2 |
|---|---|---|---|---|
| Effizienz (%) | 99,98 | 99,84 | 99,90 | 99,29 |
| Staubspeicherkapazität (g/m$^2$) | 127 | 123 | 272 | 220 |

**Patentansprüche**

1. Filtermedium für Motorluftfilter, umfassend eine Trägerlage und eine Meltblownlage, die Polyesterfasern enthält, wobei das Filtermedium elektrisch geladen ist, wobei das Filtermedium einen maximalen Porendurchmesser von 35 bis 110 $\mu$m aufweist, bestimmt nach DIN ISO 4003 (1990-10), und wobei die Durchmesser von vielen Poren des Filtermediums bei 25-65 $\mu$m liegen, bestimmt nach DIN ISO 4003 (1990-10).

2. Filtermedium nach Anspruch 1, **dadurch gekennzeichnet, dass** die Polyesterfasern Polybutylenterephthalat enthalten.

3. Filtermedium nach einem der vorhergehenden Ansprüche, **dadurch gekennzeichnet, dass** die Polyesterfasern einen mittleren Durchmesser von 2 bis 8 $\mu$m aufweisen.

4. Filtermedium nach einem der vorhergehenden Ansprüche, **dadurch gekennzeichnet, dass** die Meltblownlage eine Flächenmasse von 5 bis 90 g/m$^2$ hat.

5. Filtermedium nach einem der vorhergehenden Ansprüche, **dadurch gekennzeichnet, dass** das Filtermedium eine Gesamteffizienz von mindestens 99,00% hat.

6. Filtermedium nach einem der vorhergehenden Ansprüche, **dadurch gekennzeichnet, dass** die Trägerlage eine Papierlage oder eine Spinnvlieslage enthält.

7. Filtermedium nach Anspruch 6, **dadurch gekennzeichnet, dass** die Spinnvlieslage mono- oder bikomponente Polyesterfasern enthält.

8. Filtermedium nach Anspruch 7, **dadurch gekennzeichnet, dass** die Bikomponentenfasern PET/CoPET enthalten.

**9.** Filtermedium nach einem der vorhergehenden Ansprüche, **dadurch gekennzeichnet, dass** das Filtermedium aus der Trägerlage und der Meltblownlage besteht.

**10.** Filterelement umfassend ein Filtermedium nach einem der vorhergehenden Ansprüche.


**Claims**

**1.** A filter medium for engine air filters, comprising a carrier layer and a meltblown layer, which contains polyester fibers, wherein the filter medium is electrically charged,
wherein the filter medium has a maximum pore diameter of 35-110 $\mu$m, determined according to DIN ISO 4003 (1990-10), and wherein the diameters of many pores of the filter medium are 25-65 $\mu$m, determined according to DIN ISO 4003 (1990-10).

**2.** The filter medium according to claim 1, **characterized in that** the polyester fibers contain polybutylene terephthalate.

**3.** The filter medium according to any of the preceding claims, **characterized in that** the polyester fibers have a mean diameter of 2-8 $\mu$m.

**4.** The filter medium according to any of the preceding claims, **characterized in that** the meltblown layer has a basis weight of 5-90 g/m$^2$.

**5.** The filter medium according to any of the preceding claims, **characterized in that** the filter medium has an overall efficiency of at least 99.00%.

**6.** The filter medium according to any of the preceding claims, **characterized in that** the carrier layer contains a paper layer or a spunbond layer.

**7.** The filter medium according to claim 6, **characterized in that** the spunbond layer contains monocomponent or bicomponent polyester fibers.

**8.** The filter medium according to claim 7, **characterized in that** the bicomponent fibers contain PET/CoPET.

**9.** The filter medium according to any of the preceding claims, **characterized in that** the filter medium consists of the carrier layer and the meltblown layer.

**10.** A filter element comprising a filter medium according to any of the preceding claims.


**Revendications**

**1.** Matériau filtrant pour filtre à air de moteur, comprenant une couche support et une couche de meltblown contenant des fibres de polyester, dans lequel le matériau filtrant est chargé électriquement,
dans lequel le matériau filtrant présente un diamètre de pore maximal de 35 à 110 $\mu$m, conformément à la norme DIN ISO 4003 (1990-10), et dans lequel les diamètres de nombreux pores du matériau filtrant se situent entre 25 et 65 $\mu$m, conformément à la norme DIN ISO 4003 (1990-10).

**2.** Matériau filtrant selon la revendication 1, **caractérisé en ce que** les fibres de polyester contiennent du téréphtalate de polybutylène.

**3.** Matériau filtrant selon l'une des revendications précédentes, **caractérisé en ce que** les fibres de polyester présentent un diamètre moyen de 2 à 8 $\mu$m.

**4.** Matériau filtrant selon l'une des revendications précédentes, **caractérisé en ce que** la couche de meltblown a une masse de base de 5 à 90 g/m$^2$.

**5.** Matériau filtrant selon l'une des revendications précédentes, **caractérisé en ce que** le matériau filtrant a une efficacité totale d'au moins 99,00 %.

**6.** Matériau filtrant selon l'une des revendications précédentes, **caractérisé en ce que** la couche support contient une couche de papier ou une couche non tissée spunbond.

**7.** Matériau filtrant selon la revendication 6, **caractérisé en ce que** la couche non tissée spunbond contient des fibres de polyester mono- ou bicomposantes.

**8.** Matériau filtrant selon la revendication 7, **caractérisé en ce que** les fibres bicomposantes contiennent du PET/Co-PET.

**9.** Matériau filtrant selon l'une des revendications précédentes, **caractérisé en ce que** le matériau filtrant est constitué de la couche support et de la couche de meltblown.

**10.** Élément filtrant comprenant un matériau filtrant selon l'une des revendications précédentes.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015013285 A1